(19) **Europäisches Patentamt / European Patent Office / Office européen des brevets**

(11) **EP 2 033 862 A2**

(12) **EUROPEAN PATENT APPLICATION**

(43) Date of publication:
**11.03.2009 Bulletin 2009/11**

(51) Int Cl.:
***B60T 8/00*** (2006.01)

(21) Application number: **08163684.7**

(22) Date of filing: **04.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **05.09.2007 JP 2007230547**

(71) Applicant: **Nippon Soken, INC.**
**Nishio-shi, Aichi 445-0012 (JP)**

(72) Inventors:
• **Ueda, Yusuke**
 **Nishio-city, Aichi 445-0012 (JP)**
• **Tominaga, Motonori**
 **Nishio-city, Aichi 445-0012 (JP)**

(74) Representative: **TBK-Patent**
**Bavariaring 4-6**
**80336 München (DE)**

(54) **Brake force control apparatus**

(57) When a brake force control arrangement (13) senses starting of application of a swingback inducing force on a vehicle body through an application start timing sensing arrangement (11), the brake force control arrangement (13) reduces a brake force. Then, when the brake force control arrangement (13) senses ending of the application of the swingback inducing force on the vehicle body through an application end timing sensing arrangement (12), the brake force control arrangement (13) increases the brake force.

## FIG. 2

**Description**

The present invention relates to a brake force control apparatus for controlling a brake force applied to a tire of a vehicle at time of halting the vehicle.

At the time of applying a brake force to stop a vehicle, a mass of a vehicle body (above a spring) is displaced forward. Therefore, at the time immediately before the stopping of the vehicle, the vehicle body is tilted in a travel direction of the vehicle (occurrence of a forward pitching, i.e., a nosedive). Also, since the center of mass of the vehicle body is shifted backward due to, for example, a restoration force of a suspension, a swingback (a backward pitching) of the vehicle body occurs in a counter direction, which is opposite from the travel direction of the vehicle, at the time right after the stopping of the vehicle. The swingback of the vehicle body will often result in an unpleasant feeling of an occupant of the vehicle.

Japanese Patent No. 3820731 recites a technique for reducing the swingback of the vehicle body. According to the technique of Japanese Patent No. 3820731, the brake force control apparatus determines whether a possibility of occurrence of the swingback of the vehicle body upon application of rapid braking is high based on a vehicle speed (sensed with a vehicle speed sensor), a temporal differential value of the vehicle speed, an output value of a brake switch, and a relative vehicle body speed relative to the ground (sensed with a relative vehicle body speed sensor). Also, the brake force control apparatus determines whether the vehicle body has substantially stopped. In the case where it is determined that the possibility of occurrence of the swingback of the vehicle body upon application of rapid braking is high, and also it is determined that the vehicle body has substantially stopped, the brake force control apparatus sets the damping force of the respective left and right front wheel shock absorbers on the extending side to the maximum value and also sets the damping force of the respective left and right rear wheel shock absorbers on the extending side to the maximum value. Furthermore, the brake force control apparatus determines whether the current road is a flat horizontal road or an uphill road based on a tilt angle of the road surface in a front-rear direction of the vehicle body sensed with a tilt angle sensor. In the case where it is determined that the current road is the flat horizontal road, the brake force control apparatus sets the brake force of each wheel substantially to zero. In this way, the wheels are rotated forward to move forward relative to the vehicle body through use of the restoration force of the suspension. In contrast, in the case where it is determined that the current road is the uphill road, the brake force control apparatus sets the brake force of each wheel substantially to zero and also applies the drive force, which is required to limit the backward movement of the wheels, to the wheels based on the tilt angle of the road surface and a map, so that the wheels are rotated to move forward relative to the vehicle body.

As discussed above, in the case of the prior art brake force control apparatus, the swingback of the vehicle body is reduced by executing the above halting time brake force control operation based on the tilt angle of the road surface, along which the vehicle travels.

However, in the case of the prior art brake force control apparatus, different algorisms are used depending on the tilt angle of the road surface, so that the control program is complicated.

Furthermore, the tilt angle sensor, which senses the tilt angle of the road surface in the front-rear direction of the vehicle, and the relative vehicle body speed sensor, which senses the speed of the vehicle body relative to the road surface, are required to execute the above halting time brake force control operation. The tilt angle sensor and the relative vehicle body speed sensor are not ordinary sensors, and thereby the number of vehicles having such sensors is limited.

The present invention addresses the above disadvantage. Thus, it is an objective of the present invention to provide a brake force control apparatus, which can be installed to a wide variety of ordinary vehicles and can limit occurrence of a swingback of a vehicle body at time of halting the vehicle. To achieve the objective of the present invention, there is provided a brake force control apparatus for controlling a brake force applied to a tire of a vehicle at time of halting the vehicle. The brake force control apparatus includes a swingback inducing force sensing means, a brake force controlling means, an application start timing sensing means and an application end timing sensing means. The swingback inducing force sensing means is for sensing a swingback inducing force that induces a swingback of a vehicle body of the vehicle in a counter direction, which is opposite from a travel direction of the vehicle, immediately after stopping of both of the vehicle body and the tire after a forward pitching of the vehicle body in the travel direction of the vehicle occurs immediately before stopping of the vehicle body upon application of the brake force to the tire at the time of halting the vehicle. The brake force controlling means is for controlling the brake force applied to the tire. The application start timing sensing means is for sensing start timing of application of the swingback inducing force, which is sensed with the swingback inducing force sensing means, on the vehicle body. The application end timing sensing means is for sensing end timing of the application of the swingback inducing force, which is sensed with the swingback inducing force sensing means, on the vehicle body. When the brake force controlling means senses starting of the application of the swingback inducing force on the vehicle body through the application start timing sensing means, the brake force controlling means reduces the brake force. When the brake force controlling means senses ending of the application of the swingback inducing force on the vehicle body through the application end timing sensing means, the brake force controlling means increases the brake force.

The invention, together with additional objectives, features and advantages thereof, will be best understood from the following description, the appended claims and the accompanying drawings in which:

FIG. 1A is a descriptive view for describing a swingback phenomenon of a vehicle body;

FIG. 1B is a schematic view for modeling the vehicle body and a tire of the vehicle and a spring element interposed between the vehicle body and the tire;

FIG. 2 is a block diagram showing a brake force control apparatus installed on the vehicle according to an embodiment of the present invention;

FIG. 3 is a block diagram showing a front-rear directional force sensor device installed on the vehicle according to the embodiment;

FIG. 4 is a partial lateral cross sectional view showing a location of a first displacement measurement sensor of the front-rear directional force sensor device installed on the vehicle according to the embodiment;

FIG. 5 is a partial lateral cross sectional view showing a location of a second displacement measurement sensor of the front-rear directional force sensor device installed on the vehicle according to the embodiment;

FIG. 6 is a flowchart showing a halting time brake force control operation according to the embodiment;

FIG. 7A is a timing chart showing a change in a vehicle speed in a case where the vehicle decelerates at a constant rate and then stops;

FIG. 7B is a timing chart showing a change in a front-rear directional force in the case of the driving pattern of the vehicle shown in FIG. 7A;

FIG. 7C is a timing chart showing a change in a differential value of the front-rear directional force in the case of the driving pattern of the vehicle shown in FIG. 7A;

FIG. 7D is a timing chart showing a change in a deceleration in the case of the driving pattern of the vehicle shown in FIG. 7A upon the execution of the halting time brake force control operation according to the embodiment;

FIG. 7E is a timing chart showing a change in a brake force command value in the case of the driving pattern of the vehicle shown in FIG. 7A upon the execution of the halting time brake force control operation according to the embodiment; and

FIG. 7F is a timing chart showing a change in a deceleration in the case of the driving pattern of the vehicle shown in FIG. 7A without executing the halting time brake force control operation of the embodiment.

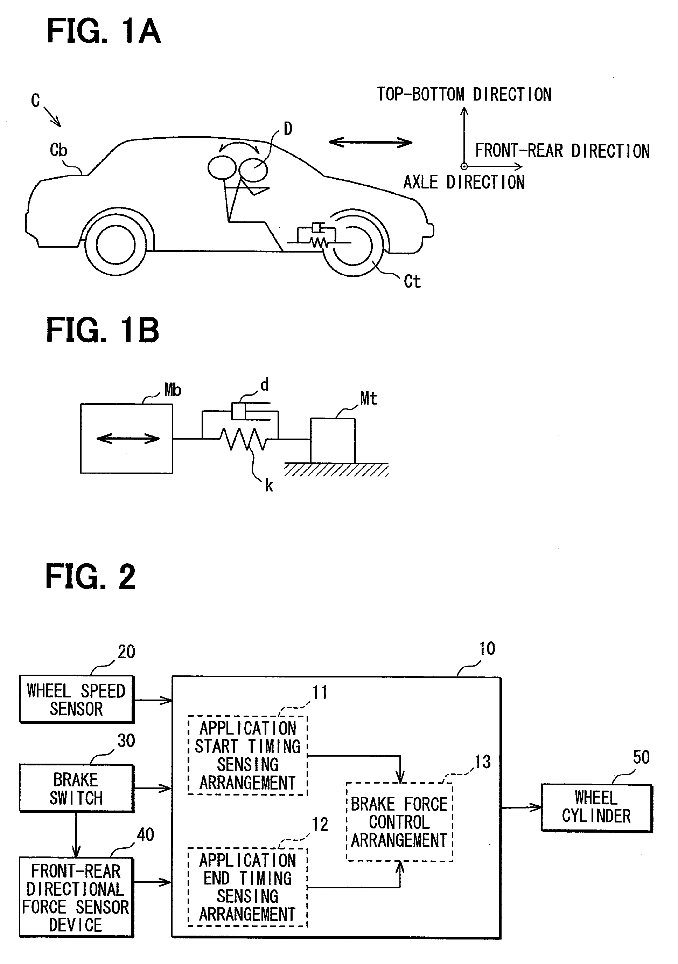

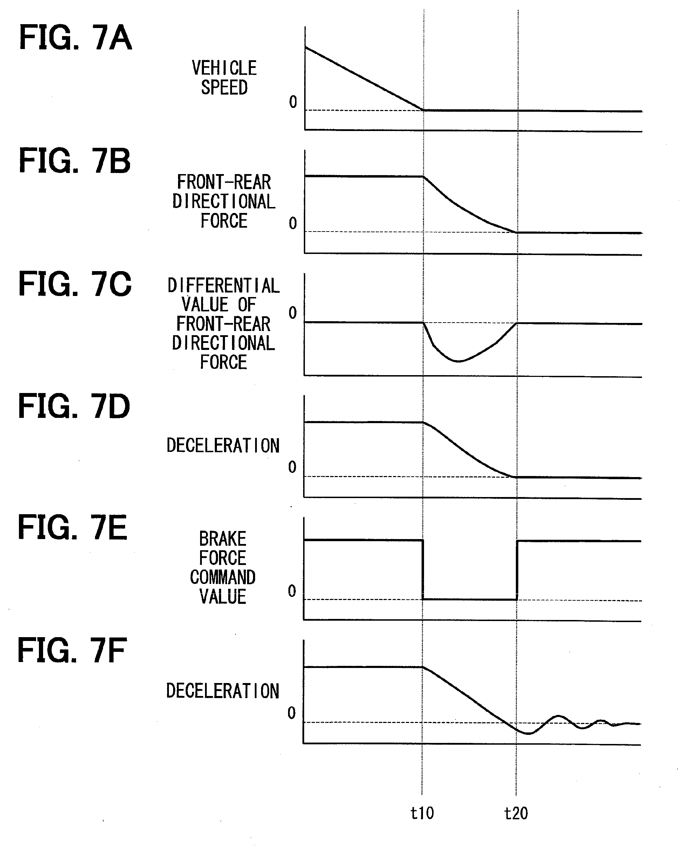

Now, with reference to FIGS. 1A to 7F, a description will be made to a brake force control apparatus according to an embodiment of the present invention. To begin with, with reference to FIGS. 1A and 1B, a description will be made to the swingback phenomenon of a vehicle body that may occur at the time of stopping a vehicle.

As shown in FIG. 1A, at the time of applying a brake to stop the vehicle C, a mass of the vehicle body Cb is displaced forward. Therefore, at the time immediately before the stopping of the vehicle C, the vehicle body is tilted in the travel direction of the vehicle (this is often referred to as the nosedive). Also, since the center of mass of the vehicle body Cb is shifted backward due to, for example, the restoration force of the suspension, the vehicle body Cb swings back in the counter direction, which is opposite from the travel direction, at the time right after the stopping of the vehicle. This phenomenon is referred to as the swingback phenomenon.

More specifically, the vehicle C includes the vehicle body Cb and tires (wheels) Ct. A spring element and a damping element, such as a suspension, is interposed between the vehicle body Cb and the respective tires Ct. That is, as shown in FIG. 1B, the vehicle C can be modeled as having a vehicle body mass Mb, a tire mass Mt, a spring element k, and a damping element d. With such a model, it is assumed for the descriptive purpose that the vehicle C reduces its speed at a constant rate and then stops. In this situation, for example, when the brake force acts on the tire Ct to reduce the rotational speed of the tire Ct about its axle, the moving speed of the tire mass Mt decreases. At this time, in general, the moving speed of the vehicle body Cb (the vehicle body mass Mb) will not immediately decrease in conformity with the reduction of the moving speed of the tire Ct (the tire mass Mt). Rather, due to the speed difference between the moving speed of the tire Ct and the moving speed of the vehicle body Cb, the spring element k and the damping element d, which are disposed between the tire Ct and the vehicle body Cb, are compressed. Then, the spring element k exerts the force on the vehicle body Cb mainly in the counter direction, which is opposite from the travel direction of the vehicle C. Therefore, the moving speed of the vehicle body Cb is reduced. When the moving speed of the vehicle body Cb becomes the same as the moving speed of the tire Ct, the spring element k is not compressed any further. Thereby, the aforementioned force is not exerted. These steps make up a cycle. The cycle includes the steps of applying the brake force to the tire Ct, reducing the moving speed of the tire Ct, compressing the spring element k, exerting the force on the vehicle body Cb in the counter direction, which is opposite from the travel direction of the vehicle C, reducing the moving speed of the vehicle body Cb and allowing the moving speed of the vehicle body Cb to become the same as the moving speed of the tire Ct. The above cycle is repeated in the above order, thereby allowing the vehicle body Cb and the tire Ct to stop at the same time.

However, in a case where the vehicle C having traveled at a high speed abruptly reduces its speed to stop, the tire Ct may stop before the moving speed of the vehicle body Cb becomes the same as the moving speed of the tire Ct. At this time, the spring element k and the damping element d are compressed until the vehicle body Cb stops after the stopping of the tire Ct. Thereby, the energy is stored in the spring element k. Also, at this time, the vehicle body Cb has the forward leaning attitude (the aforementioned nosedive, i.e., forward pitching). Subsequently, immediately after the stopping of both of the tire Ct and the vehicle body Cb, the brake force is normally kept applied on the tire Ct, so that the tire Ct cannot be rotated about its axle. Therefore, the energy, which is stored in the spring element k, is applied as a swingback inducing force on the vehicle body Cb mainly in the counter direction, which is opposite from the travel direction of the vehicle C, through various components (not shown in FIGS. 1A and 1B) including the spring element k. In this manner, the swingback phenomenon (backward pitching) of the vehicle body Cb occurs. Note that a driver (or a passenger) D in the vehicle may have unpleasant feeling about the swingback of the vehicle body Cb, which occurs in the above described manner.

In order to reduce the occurrence of such a swingback of the vehicle body Cb, the brake force control apparatus of the present embodiment is configured as follows. That is, as shown in FIG. 2, the brake force control apparatus 10 of the present embodiment is mounted on the vehicle C which includes a wheel speed sensor 20, a brake switch 30, a front-rear directional force sensor device 40 and a wheel cylinder 50. The brake force control apparatus 10 has an application start timing sensing arrangement 11, an application end timing sensing arrangement 12, and a brake force control arrangement 13.

Here, the wheel speed sensor 20 is connected to the brake force control apparatus 10 and senses the rotational speed of the tire (hereinafter also referred to as a wheel) Ct. The wheel speed sensor 20 provides a sensed wheel speed to the brake force control apparatus 10. Furthermore, the brake switch 30 is connected to the brake force control apparatus 10 and the front-rear directional force sensor device 40, which will be discussed later. For example, the brake switch 30 is placed in an ON state when the driver D depresses a brake pedal (not shown) of the vehicle C. In contrast, the brake switch 30 is placed in an OFF state when the brake pedal is not depressed. The output signal, which indicates the ON or OFF state of the brake switch 30, is supplied to the brake force control apparatus 10 and the front-rear directional force sensor device 40. Furthermore, the wheel cylinder 50 is connected to the brake force control apparatus 10 and is provided to each tire Ct of the vehicle C. Each wheel cylinder 50 exerts the brake force on the corresponding tire Ct based on a brake signal, which is outputted from the brake force control apparatus 10. Note that the present embodiment employs the wheel speed sensor 20, the brake switch 30 and the wheel cylinder 50, which are commonly available and thus not discussed herein in more detail.

The aforementioned front-rear directional force sensor device 40 is connected to the brake force control apparatus 10 and senses the front-rear directional force, which includes a front-rear directional force component of the aforementioned swingback inducing force. Here, the front-rear directional force component is a main force component of the swingback inducing force. The front-rear directional force sensor device 40 outputs the sensed front-rear directional force to the brake force control apparatus 10.

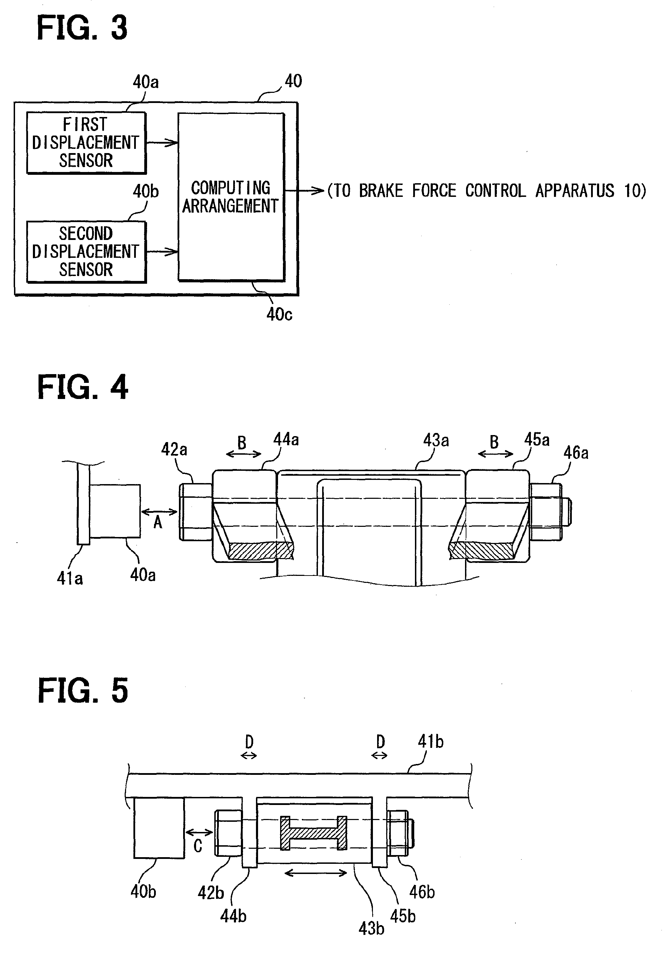

Now, with reference also to FIGS. 3 to 5, a description will be made to the front-rear directional force sensor device 40. FIG. 3 is a block diagram illustrating an exemplary configuration of the front-rear directional force sensor device 40. FIGS. 4 and 5 are partial cross-sectional side views illustrating how first and second displacement measurement sensors (also referred to as first and second displacement sensors) 40a, 40b, which constitute the front-rear directional force sensor device 40, are provided in the vehicle C, respectively.

As shown in FIG. 3, the front-rear directional force sensor device 40 includes the first displacement measurement sensor 40a, the second displacement measurement sensor 40b and a computing arrangement 40c. The computing arrangement 40c computes the aforementioned front-rear directional force based on output values of the first and second displacement measurement sensors 40a, 40b.

In the present embodiment, for example, an eddy-current sensor is employed as the first displacement measurement sensor 40a. As shown in FIG. 4, the first displacement measurement sensor 40a is attached to a mounting member 41a to oppose a head of a bolt (a displaceable portion) 42a in the axial direction of the bolt 42a. Here, the bolt 42a extends through an upper support portion 43a of a suspension member (not shown), which constitutes part of the vehicle body Cb. The bolt 42a also extends through end portions of bar-shaped portions 44a, 45a of an upper arm (not shown), which is a component of the suspension system that connects the tire Ct to the vehicle body Cb. A distal end portion of the bolt 42a is screwed into a nut 46a, so that the aforementioned suspension member and the aforementioned upper arm are connected together. Furthermore, the mounting member 41a, to which the first displacement measurement sensor 40a is attached, is secured to the same vehicle body Cb side member, to which the aforementioned suspension member is secured. The first displacement measurement sensor 40a senses the amount X1 of relative displacement of the head of the bolt 42a in the axial direction, as indicated by an arrow A in FIG. 4. The axial direction of the bolt 42a coincides with the front-rear direction of the vehicle C (see FIG. 1A). Note that although the present embodiment employs the eddy-current sensor as the first displacement measurement sensor 40a, the invention is not limited thereto. For example, it is also possible to employ any one of various other types of well-known position sensors (e.g., optoelectronic sensors) as the first displacement measurement sensor 40a in place of the eddy-current sensor.

Here, for example, when the brake force is applied on the tire Ct, the upper arm receives a force in the direction indicated by an arrow B in FIG. 4. This force causes the upper arm and the upper support portion 43a of the suspension member to deflect in the direction of the arrow B as well as the bolt 42a to move in the same direction. Accordingly, the amount of displacement, which is sensed, i.e., measured with the first displacement measurement sensor 40a, is also the amount of displacement of the upper arm and the upper support portion 43a of the suspension member.

In the present embodiment, for example, an eddy-current sensor is also employed as the second displacement measurement sensor 40b. The second displacement measurement sensor 40b is attached to a base plate portion 41b of a lower support portion of the aforementioned suspension member to oppose a head of a bolt (a displaceable portion) 42b in the axial direction of the bolt 42b. Accordingly, the second displacement measurement sensor 40b is secured to the suspension member, which is the component of the vehicle body Cb. Note that as shown in FIG. 5, the lower support portion of the suspension member is configured such that a pair of mutually opposing brackets 44b, 45b protrude perpendicularly from the base plate portion 41b of the lower support portion. Furthermore, an end portion 43b of a lower arm (not shown), which is a component of the suspension system that couples the tire Ct to the vehicle body Cb, is accommodated between the aforementioned pair of brackets 44b, 45b. The bolt 42b extends through the aforementioned pair of brackets 44b, 45b and the end portion 43b of the lower arm. A distal end portion of the bolt 42b is screwed into a nut 46b, so that the lower support portion of the suspension member and the end portion 43b of the lower arm are connected together. The second displacement measurement sensor 40b senses the amount X2 of relative displacement of the head of the bolt 42a in the axial direction, as indicated by an arrow C in FIG. 4. The axial direction of the bolt 42b coincides with the front-rear direction of the vehicle C (see FIG. 1A).

Here, for example, when brake force acts on the tire Ct, the brackets 44b, 45b receive a force in a direction of an arrow D in FIG. 5. This force causes deformation of the lower arm and the brackets 44b, 45b in the direction of the arrow D and movement of the bolt 42b in the same direction. Accordingly, the amount of movement, which is sensed, i.e., measured with the second displacement measurement sensor 40b, is also the amount of movement of the lower arm and the brackets 44b, 45b. Note that although the present embodiment employs the eddy-current sensor as the second displacement measurement sensor 40b, the invention is not limited thereto. For example, it is also possible to employ any one of various other types of well-known position sensors (e.g., optoelectronic sensors) as the second displacement measurement sensor 40b in place of the eddy-current sensor.

The computing arrangement 40c senses the application of the brake force on the tire Ct based on an output signal of the aforementioned brake switch 30. When the computing arrangement 40c senses the application of the brake force on the tire Ct, the computing arrangement 40c computes the front-rear force, which acts in the front-rear direction of the vehicle C, based on the amount X1 of displacement and the amount X2 of displacement, which are sensed with the first displacement measurement sensor 40a and the second displacement measurement sensor 40b, respectively. Now, a sensing principal of such a front-rear force will be described. In the present embodiment, the computing arrangement 40c determines whether the brake force is applied on the tire Ct based on the output signal from the aforementioned brake switch 30. However, the present invention is not limited to this. For example, the computing arrangement 40c may determine whether the brake force is applied on the tire Ct based on an increase in a brake hydraulic pressure. Then, the computing arrangement 40c computes the front-rear directional force applied on the vehicle C based on the amount X1 of displacement and the amount X2 of displacement, which are sensed with the first displacement measurement sensor 40a and the second displacement measurement sensor 40b, respectively. Now, the sensing principal of such a front-rear force will be described in detail.

As described above, the energy, which is stored in the aforementioned spring element k disposed between the vehicle body Cb and the tire (wheel) Ct, is transferred as a swingback inducing force from the spring element k to the vehicle body Cb through various components. Here, for example, the aforementioned upper arm and the upper support portion 43a of the suspension member or the aforementioned lower arm and the brackets 44b, 45b are not rigid bodies. Thus, at this time, the aforementioned energy, which is transferred as the swingback inducing force, causes the small amount of displacement of these components. The swingback inducing force is mainly made up of the front-rear directional force applied on the vehicle body Cb in the front-rear direction of the vehicle C and the moment about the axle among the well-known six components of force. Accordingly, each of the amount X1 of displacement and the amount X2 of displacement, which are sensed with the first displacement measurement sensor 40a and the second displacement measurement sensor 40b, becomes a corresponding value that corresponds to a resultant force of the front-rear directional force, which is applied on the vehicle body Cb in the front-rear direction of the vehicle C, and the top-bottom directional force, which is applied on the vehicle body Cb in the top-bottom direction of the vehicle. Furthermore, the amount X1 of displacement and the amount X2 of displacement, which are sensed with the first displacement measurement sensor 40a and the second displacement measurement sensor 40b, respectively, are of the different displacing parts (the displaceable portions). Thus, a degree of influence of the front-rear directional force and of the top-bottom directional force on the amount X1 of displacement differs from a degree of influence of the front-rear directional force and of the top-bottom directional force on the amount X2 of displacement. Therefore, it is possible to sense only the front-rear directional force by eliminating the influence of the moment about the axle (and of the top-bottom directional force) based on the amount X1 of displacement and the amount X2 of displacement.

Specifically, the computing arrangement 40c computes the front-rear directional force Fx through the following first equation (1) and second equation (2).

$$X1 = \alpha1 \times Fx + \beta1 \times My \quad ..... \text{Equation (1)}$$

$$X2 = \alpha2 \times Fx + \beta2 \times My \quad ..... \text{Equation (2)}$$

In the first and second equations, $\alpha1$ is a coefficient, which includes the corresponding elastic modulus, and $\alpha2$ is a coefficient, which includes the corresponding elastic modulus. Furthermore, $\beta1$ is a coefficient, which includes the distance from the axle to the first displacement measurement sensor 40a, and $\beta2$ is a coefficient, which includes the distance from the axle to the second displacement measurement sensor 40b. Here, the above coefficients $\alpha1$, $\alpha2$, $\beta1$, $\beta2$ change depending on the corresponding one of the attachment location of the first displacement measurement sensor 40a and the attachment location of the second displacement measurement sensor 40b and are obtained through the experiments. The inventors of the present invention have confirmed that the degree of influence of the front-rear directional force Fx on the amount X1 of displacement and the amount X2 of displacement is substantially larger than the degree of influence of the moment My about the axle (and thereby the top-bottom directional force Fy) on the amount X1 of displacement and the amount X2 of displacement. Therefore, in the present embodiment, the computing arrangement 40c senses (computes) the front-rear directional force Fx based on the amount X1 of displacement and the amount X2 of displacement.

Furthermore, the application start timing sensing arrangement 11 of the brake force control apparatus 10 senses the start timing of the application of the swingback inducing force on the vehicle body Cb in the counter direction, which is opposite from the travel direction of the vehicle C, based on the front-rear directional force Fx, which is sensed (computed) by the front-rear directional force sensor device 40. When the application start timing sensing arrangement 11 senses the start timing of the application of the swingback inducing force on the vehicle body Cb in the counter direction, the application start timing sensing arrangement 11 notifies this to the brake force control arrangement 13. The timing, at which the amount of change per unit time in the front-rear directional force Fx sensed with the front-rear directional force sensor device 40 becomes larger than a predetermined first determination value, is sensed by the application start timing sensing arrangement 11 as the start timing of the application of the front-rear directional force Fx on the vehicle body Cd in the counter direction. The first determination value is obtained through, for example, experiments and/or simulations.

Furthermore, the application end timing sensing arrangement 12 of the brake force control apparatus 10 senses the end timing of the application of the swingback inducing force on the vehicle body Cb in the counter direction, which is opposite from the travel direction of the vehicle C, based on the front-rear directional force Fx, which is sensed (computed) by the front-rear directional force sensor device 40. When the application end timing sensing arrangement 12 senses the end timing of the application of the swingback inducing force on the vehicle body Cb in the counter direction, the application end timing sensing arrangement 12 notifies it to the brake force control arrangement 13. The timing, at which the amount of change per unit time in the front-rear directional force Fx sensed with the front-rear directional force sensor device 40 becomes smaller than a predetermined second determination value, is sensed by the application end timing sensing arrangement 12 as the end timing of the application of the front-rear directional force Fx on the vehicle body Cd in the counter direction. The second determination value is also obtained through, for example, experiments and/or simulations.

When the brake force control arrangement 13 of the brake force control apparatus 10 senses the starting of the application of the swingback inducing force on the vehicle body Cb through the application start timing sensing arrangement 11, the brake force control arrangement 13 outputs a brake signal to the wheel cylinder 50 to reduce the brake force actually applied on the tire Ct. When the brake force control arrangement 13 senses the ending of the application of the swingback inducing force on the vehicle body Cb through the application end timing sensing arrangement 12, the brake force control arrangement 13 outputs a brake signal to the wheel cylinder 50 to increase the brake force actually applied on the tire Ct.

The start timing of the application of the swingback inducing force on the vehicle body Cb is the timing right after stopping of both of the tire Ct and the vehicle body Cb. When the brake force is kept applied on the tire Ct after this start timing, the tire Ct cannot be rotated about the axle. Thus, the swingback inducing force may be applied on the vehicle body Cb to cause generation of the swingback of the vehicle body Cb. However, according to the present embodiment, when the brake force control arrangement 13 senses the above start timing, the brake force control arrangement 13 reduces the brake force, which is actually applied on the tire Ct, through the wheel cylinder 50. Thereby, the tire Ct is enabled to rotate about the axle. Therefore, the tire Ct, the mass of which is smaller than that of the vehicle body Cb, is slightly rotated to move forward, so that the swingback of the vehicle body Cb is reduced. Here, the tire Ct is only slightly moved forward, and thereby the vehicle body Cb is substantially stopped. That is, it is possible to reduce or limit the occurrence of the swingback phenomenon of the vehicle body Cb without elongating the braking distance of the vehicle C.

The end timing of the application of the swingback inducing force on the vehicle body Cb is the timing, at which the swingback inducing force ceases. When the brake force, which is actually applied on the tire Ct, is kept reduced after this end timing, the vehicle C may possibly starts moving along a sloped road (e.g., a downhill or uphill road). However, according to the present embodiment, when the brake force control arrangement 13 senses the above end timing, the brake force control arrangement 13 increases the brake force, which is actually applied on the tire Ct, through the wheel cylinder 50. Thus, the tire Ct cannot be rotated about the axle. Thereby, even when the vehicle C is on the sloped road, the vehicle does not start moving along the sloped road to maintain the stop position of the vehicle C.

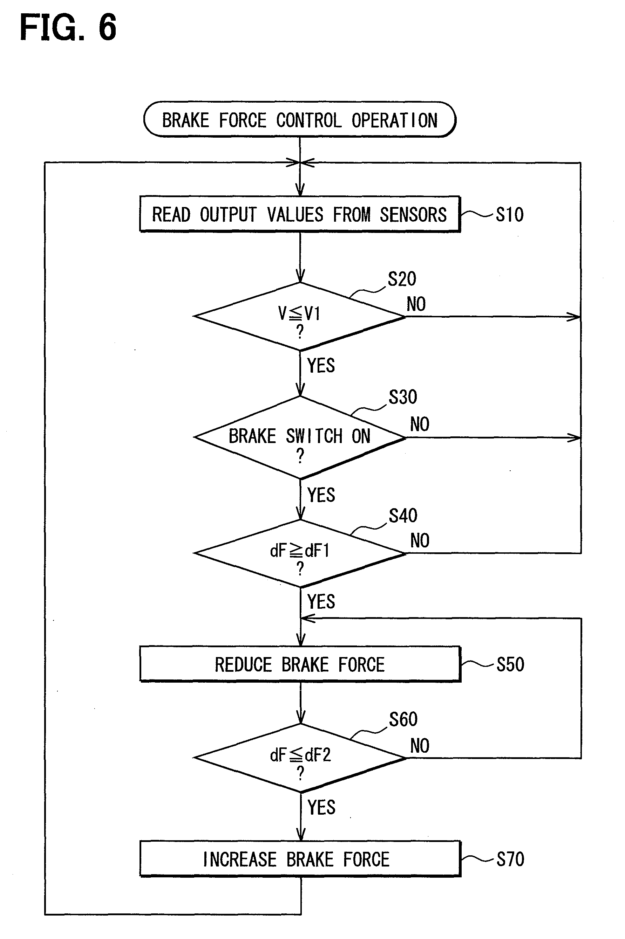

Now, the halting time brake force control operation, which is executed by the brake force control apparatus 10, will be described with reference to FIG. 6.

In the present embodiment, for example, when the driver D of the vehicle C turns on a main switch (not shown), the brake force control apparatus 10 starts to execute the halting time brake force control operation shown in FIG. 6. First, at step S10, the brake force control apparatus 10 reads the output values from the various sensors connected to the brake force control apparatus 10. More specifically, the brake force control apparatus 10 reads the sensor output value from the wheel speed sensor 20, the output value from the brake switch 30, and the output value from the front-rear directional force sensor device 40.

After reading of the output values from the various sensors, the application start timing sensing arrangement 11 determines whether the wheel speed V, which is read at step S10, is equal to or less than a predetermined wheel speed V1, i.e., whether the wheel speed is sufficiently low at step S20. Since the swingback phenomenon of the vehicle body Cb occurs at the time of stopping both of the vehicle body Cb and the tire Ct, the swingback phenomenon of the vehicle body Cb would never occur at the time of having the high wheel speed V. Accordingly, the determination made at step S20 is for improving an accuracy of a determination made at step S40, which will be described below. Therefore, in a case where the accuracy of the determination made at step S40 is sufficiently high, step S20 may be eliminated.

When it is determined that the wheel speed is sufficiently low at step S20 (i.e., YES at step S20), the application start timing sensing arrangement 11 determines whether the brake switch 30 is turned on, i.e., whether the driver D of the vehicle C is pressing the brake pedal at step S30. Since the swingback phenomenon of the vehicle body Cb occurs at the time of stopping both of the vehicle body Cb and the tire Ct, the swingback phenomenon of the vehicle body Cb would never occur at the time of having the low wheel speed V unless the vehicle C is decelerating. The determination made at step S30 is for improving the accuracy of the determination made at step S40, which will be described below. Therefore, in the case where the accuracy of the determination made at step S40 is sufficiently high, step S30 may be eliminated.

When it is determined that the brake switch 30 is turned on at step S30 (i.e., YES at step S30), the application start timing sensing arrangement 11 determines whether the amount dF of change per unit time in the front-rear directional force Fx sensed with the front-rear directional force sensor device 40 is equal to or larger than a first determination valve dF1 at step S40. When both of the vehicle body Cb and the tire Ct stop, the application of the swingback inducing force in the counter direction, which is opposite from the travel direction of the vehicle C, starts, so that the front-rear directional force Fx, which includes the front-rear directional force component that is the main constituent force component of the swingback inducing force, abruptly changes (abruptly drops). Therefore, the first determination value dF1 is obtained through, for example, the experiments and/or simulations in advance, and the amount dF is compared with this first determination value dF1 at step S40 to appropriately determine whether the application of the swingback inducing force on the vehicle body Cb in the counter direction, which is opposite from the travel direction of the vehicle C, has started.

When it is determined that the application of the swingback inducing force on the vehicle body Cb in the counter direction, which is opposite from the travel direction of the vehicle C, has started, i.e., when YES is returned at step S40, the application start timing sensing arrangement 11 notifies this to the brake force control arrangement 13. Then, at step S50, the brake force control arrangement 13 reduces the brake force, which is actually applied on the tire Ct, by a predetermined amount through the wheel cylinder 50. Thereby, the tire Ct is enabled to rotate about the axle. Therefore, the tire Ct, the mass of which is smaller than that of the vehicle body Cb, is slightly rotated to move forward, so that the swingback of the vehicle body Cb is reduced or limited.

When NO is returned at any one of steps S20, S30, S40, the possibility of generating the swingback phenomenon of the vehicle body Cb is relatively small. Therefore, in such a case, the brake force control apparatus 10 will return to step S10 without executing any specific brake force control operation through the wheel cylinder 50. That is, steps S10 to S40 are repeated.

In contrast, after the execution of step S50, the application end timing sensing arrangement 12 determines whether the amount dF of change per unit time in the front-rear directional force Fx sensed with the front-rear directional sensor 40 is equal to or smaller than a second determination value dF2. The swingback inducing force gradually decreases upon the starting of the application of the swingback inducing force on the vehicle body Cb in the counter direction, which is opposite from the travel direction of the vehicle C. Accordingly, the change in the front-rear directional force Fx, which includes the front-rear directional force component that is the main constituent force component of the swingback inducing force, is reduced. Therefore, the second determination value dF2 is obtained through, for example, the experiments and/or simulations in advance, and the amount dF is compared with this second determination value dF2 at step S60 to appropriately determine whether the application of the swingback inducing force on the vehicle body Cb in the counter direction, which is opposite from the travel direction of the vehicle C, has ended.

When it is determined that the application of the swingback inducing force on the vehicle body Cb in the counter direction, which is opposite from the travel direction of the vehicle C, has ended, i.e., when YES is returned at step S60, the application end timing sensing arrangement 12 notifies this to the brake force control arrangement 13. Then, at step S70, the brake force control arrangement 13 increases the brake force, which is actually applied on the tire Ct, by a predetermined amount through the wheel cylinder 50. Thus, the tire Ct cannot be rotated about the axle. Thereby, even when the vehicle C is on the sloped road, the vehicle does not start moving along the sloped road to maintain the stop position of the vehicle C. When NO is returned at step S60, the swingback inducing force is still applied on the vehicle body Cb. Thus, the process of step S50 is repeated until YES is returned at step S60.

Next, with reference to FIGS. 7A to 7F, there will be described the advantage of reducing the swingback phenomenon of the vehicle body Cb in the case where the brake force control apparatus 10 is installed on the vehicle C.

With reference to FIG. 7A, it is assumed that the vehicle C decelerates at a constant rate during the traveling of the vehicle C in the forward direction and stops at, for example, the time t10 (i.e., stops both of the vehicle body Cb and the tire Ct).

At this time, as shown in FIG. 7B, the front-rear directional force Fx sensed (computed) with the front-rear directional force sensor device 40 is kept at generally a constant value until the time t10 in the middle of decelerating the vehicle C. Therefore, a differential value of the front-rear directional force Fx becomes generally zero as shown in FIG. 7C, and the deceleration (the front-rear directional acceleration G) becomes generally a constant value as shown in FIG. 7D.

Furthermore, as shown in FIG. 7B, after the time t10, the application of the swingback inducing force on the vehicle body Cb in the counter direction, which is opposite from the travel direction of the vehicle C, starts. Therefore, the front-rear directional force Fx, which is the main constituent force component of the swingback inducing force, is rapidly changed (rapidly reduced). In response to this, the differential value of the front-rear directional force Fx and the front-rear directional acceleration G are rapidly changed (rapidly reduced), as shown in FIGS. 7C and 7D. Thereby, the application start timing sensing arrangement 11 determines that the application of the swingback inducing force on the vehicle body Cb in the counter direction, which is opposite from the travel direction of the vehicle C, has started at step S40. Also, as shown in FIG. 7E, the brake force control arrangement 13 outputs a brake force command (actually setting the brake force command value to zero) to the wheel cylinder 50, so that the brake force, which is actually applied on the tire Ct, is reduced (is set to zero).

Then, as shown in FIG. 7B, the front-rear directional force Fx becomes generally a constant value at, for example, the time t20. Therefore, as shown in FIGS. 7C and 7D, each of the differential value of the front-rear directional force Fx and the deceleration becomes generally constant at the value of zero. Thereby, the application end timing sensing arrangement 12 determines that the application of the swingback inducing force on the vehicle body Cb in the counter direction, which is opposite from the travel direction of the vehicle C, has ended at step S60. Also, as shown in FIG. 7E, the brake force control arrangement 13 outputs a brake force command to the wheel cylinder 50, so that the brake force, which is actually applied on the tire Ct, is increased.

As discussed above, in the driving pattern shown in FIG. 7A, the brake force, which is actually applied on the tire Ct, is decreased (to zero) in the period from the time t10 to the time t20 to permit the rotation of the tire Ct about the axle. Thereby, the tire Ct is slightly rotated to move forward, and thereby the generation of the swingback of the vehicle body Cb is reduced or limited. Specifically, with reference to FIG. 7F, in a case where the above halting time brake force control operation is not executed, the deceleration is substantially changed after the time t20, so that the swingback of the vehicle body Cb is generated. In contrast, as shown in FIG. 7D, in the case of the present embodiment where the above halting time brake force control operation is executed, the deceleration is kept generally constant even after the time t20, so that the swingback of the vehicle body Cd is not generated.

With use of the brake force control apparatus of the present embodiment described above, it is possible to execute the brake force control operation at the time of stopping (halting) the vehicle C regardless of the tilt angle of the road surface using the single control program. Therefore, unlike the prior art described above, the control program is simplified. Furthermore, the vehicle is not required to have the tilt angle sensor, which senses the tilt angle of the road surface in the front-rear direction of the vehicle, and the relative vehicle body speed sensor, which senses the speed of the vehicle body relative to the road surface. Therefore, the brake force control apparatus of the present embodiment can be installed in various ordinary vehicles.

The present invention is not limited to the above embodiment, and the above embodiment can be modified in various ways without departing from the spirit and scope of the present invention. Specifically, the above embodiment may be modified as follows.

In the above embodiment, the front-rear directional force sensor device 40 includes the first displacement measurement sensor 40a, the second displacement measurement sensor 40b and the computing arrangement 40c, and the computing arrangement 40c computes the front-rear directional force based on the sensor output values of the first and second displacement measurement sensors 40a, 40b. Alternatively, three or more displacement measurement sensors may be provided. Also, it is possible to use only one of the first displacement measurement sensor 40a and the second displacement measurement sensor 40b. Even in this way, the advantages discussed in the above embodiment can be achieved, and the computing load on the computing arrangement 40c can be reduced.

In the above embodiment, the start timing of the application of the swingback inducing force on the vehicle body Cb is sensed based on the front-rear directional force, which is sensed with the front-rear directional force sensor device 40. However, the present invention is not limited to this. As discussed above, the start timing of the application of the swingback inducing force on the vehicle body Cb is the timing right after the stopping of both of the tire Ct and the vehicle body Cb. Therefore, this timing may be sensed through the wheel speed sensor and the brake sensor.

Additional advantages and modifications will readily occur to those skilled in the art. The invention in its broader terms is therefore not limited to the specific details, representative apparatus, and illustrative examples shown and described.

When a brake force control arrangement (13) senses starting of application of a swingback inducing force on a vehicle body through an application start timing sensing arrangement (11), the brake force control arrangement (13) reduces a brake force. Then, when the brake force control arrangement (13) senses ending of the application of the swingback inducing force on the vehicle body through an application end timing sensing arrangement (12), the brake force control arrangement (13) increases the brake force.

**Claims**

1.   A brake force control apparatus for controlling a brake force applied to a tire of a vehicle at time of halting the vehicle, the brake force control apparatus comprising:

a swingback inducing force sensing means (40) for sensing a swingback inducing force that induces a swingback of a vehicle body of the vehicle in a counter direction, which is opposite from a travel direction of the vehicle, immediately after stopping of both of the vehicle body and the tire after a forward pitching of the vehicle body in the travel direction of the vehicle occurs immediately before stopping of the vehicle body upon application of the brake force to the tire at the time of halting the vehicle;
a brake force controlling means (13) for controlling the brake force applied to the tire;
an application start timing sensing means (11) for sensing start timing of application of the swingback inducing force, which is sensed with the swingback inducing force sensing means (40), on the vehicle body; and
an application end timing sensing means (12) for sensing end timing of the application of the swingback inducing force, which is sensed with the swingback inducing force sensing means (40), on the vehicle body, wherein:

when the brake force controlling means (13) senses starting of the application of the swingback inducing force on the vehicle body through the application start timing sensing means (11), the brake force controlling means (13) reduces the brake force; and
when the brake force controlling means (13) senses ending of the application of the swingback inducing force on the vehicle body through the application end timing sensing means (12), the brake force controlling means (13) increases the brake force.

2.   The brake force control apparatus according to claim 1, wherein:

the swingback inducing force sensing means (40) is a front-rear directional force sensing means (40) that includes a plurality of displacement measurement sensors (40a, 40b), each of which is provided adjacent to a corresponding one of a plurality of displaceable portions (42a, 42b) that are displaced in a front-rear direction of the vehicle upon application of the brake force to the tire;
each of the plurality of displacement measurement sensors (40a, 40b) measures an amount of displacement of the corresponding one of the plurality of displaceable portions (42a, 42b) upon the application of the brake force to the tire;

the front-rear directional force sensing means (40) senses a front-rear directional force, which includes a front-rear directional force component of the swingback inducing force exerted in the front-rear direction of the vehicle, based on the measured amount of displacement of each of the plurality of displacement measurement sensors (40a, 40b);

the application start timing sensing means (11) senses the start timing of the application of the swingback inducing force on the vehicle body based on the front-rear directional force, which is sensed with the front-rear directional force sensing means (40); and

the application end timing sensing means (12) senses the end timing of the application of the swingback inducing force on the vehicle body based on the front-rear directional force, which is sensed with the front-rear directional force sensing means (40).

3. The brake force control apparatus according to claim 2, wherein the application start timing sensing mans (11) senses timing, at which an amount of change per unit time in the front-rear directional force sensed with the front-rear directional force sensing means (40) becomes larger than a predetermined first determination value, as the start timing of the application of the swingback force on the vehicle body.

4. The brake force control apparatus according to claim 2 or 3, wherein the application end timing sensing mans (12) senses timing, at which the amount of change per unit time in the front-rear directional force sensed with the front-rear directional force sensing means (40) becomes smaller than a predetermined second determination value after the sensing of the start of the application of the swingback inducing force on the vehicle body with the application start timing sensing means (11), as the end timing of the application of the swingback force on the vehicle body.

# FIG. 1A

TOP-BOTTOM DIRECTION

FRONT-REAR DIRECTION

AXLE DIRECTION

# FIG. 1B

# FIG. 2

| WHEEL SPEED SENSOR | 20 |
| BRAKE SWITCH | 30 |
| FRONT-REAR DIRECTIONAL FORCE SENSOR DEVICE | 40 |

10
11 APPLICATION START TIMING SENSING ARRANGEMENT
12 APPLICATION END TIMING SENSING ARRANGEMENT
13 BRAKE FORCE CONTROL ARRANGEMENT
50 WHEEL CYLINDER

# FIG. 3

| | |
|---|---|
| FIRST DISPLACEMENT SENSOR 40a | COMPUTING ARRANGEMENT → (TO BRAKE FORCE CONTROL APPARATUS 10) |
| SECOND DISPLACEMENT SENSOR 40b | |

40  40c

# FIG. 4

# FIG. 5

# FIG. 6

```
        ┌─────────────────────────────────────┐
        │    BRAKE FORCE CONTROL OPERATION     │
        └─────────────────────────────────────┘
                          │
        ┌─────────────────────────────────────┐
        │    READ OUTPUT VALUES FROM SENSORS   │──── S10
        └─────────────────────────────────────┘
                          │
                        S20
                       ╱────╲           NO
                      ╱ V≦V1 ╲ ──────────────────→
                      ╲   ?  ╱
                       ╲────╱
                          │ YES
                        S30
                       ╱──────────╲     NO
                      ╱ BRAKE SWITCH ON ╲ ──────────→
                      ╲       ?        ╱
                       ╲──────────────╱
                          │ YES
                        S40
                       ╱────────╲       NO
                      ╱ dF≧dF1   ╲ ──────────────→
                      ╲    ?     ╱
                       ╲────────╱
                          │ YES
        ┌─────────────────────────────────────┐
        │          REDUCE BRAKE FORCE          │──── S50
        └─────────────────────────────────────┘
                          │
                        S60
                       ╱────────╲       NO
                      ╱ dF≦dF2   ╲ ──────────────→
                      ╲    ?     ╱
                       ╲────────╱
                          │ YES
        ┌─────────────────────────────────────┐
        │         INCREASE BRAKE FORCE         │──── S70
        └─────────────────────────────────────┘
```

**FIG. 7A**

VEHICLE
SPEED

0

**FIG. 7B**

FRONT-REAR
DIRECTIONAL
FORCE

0

**FIG. 7C**

DIFFERENTIAL
VALUE OF
FRONT-REAR
DIRECTIONAL
FORCE

0

**FIG. 7D**

DECELERATION

0

**FIG. 7E**

BRAKE
FORCE
COMMAND
VALUE

0

**FIG. 7F**

DECELERATION

0

t10     t20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3820731 B